# EUROPÄISCHE PATENTSCHRIFT

(11) **EP 2 863 108 B1**
(45) Veröffentlichungstag und Bekanntmachung des Hinweises auf die Patenterteilung: **23.02.2022**
(21) Anmeldenummer: 14185127.9
(22) Anmeldetag: 17.09.2014
(51) Int. Cl.: B60Q 1/12, B60Q 1/18, F21S 41/148, F21S 41/151, F21S 41/155, F21S 41/33, F21Y 105/10, F21Y 115/10

(54) **LED-Modul eines Kraftfahrzeugscheinwerfers**
LED module of a motor vehicle headlamp
Module à LED d'un phare de véhicule automobile

(30) Priorität: 07.10.2013 DE 102013220192
(43) Veröffentlichungstag der Anmeldung: 22.04.2015
(73) Patentinhaber: Automotive Lighting Reutlingen GmbH, 72762 Reutlingen (DE)
(72) Erfinder: Wagner, J. Tobias F., 72072 Tübingen (DE)
(74) Vertreter: DREISS Patentanwälte PartG mbB

(56) Entgegenhaltungen:
- EP-A1- 1 970 618
- EP-A1- 2 045 514
- EP-A1- 2 386 795
- EP-A1- 2 474 779
- DE-U1-202010 003 058
- JP-A- 2010 165 531
- JP-U- S61 197 601
- US-A1- 2004 252 517
- US-A1- 2005 041 436
- US-A1- 2009 207 625
- US-A1- 2011 222 303

## Beschreibung

Die vorliegende Erfindung betrifft ein LED-Modul eines Scheinwerfers eines Kraftfahrzeugs nach dem Oberbegriff des Anspruchs 1. Ein solches LED-Modul ist aus der US 2004/0252517 A1 bekannt.

Ein weiteres LED-Modul ist bspw. aus der US 2009/0251916 A1 bekannt. Das bekannte LED-Modul weist jeweils eine LED je Reflektor auf. Das bekannte LED-Modul kann u.a. zur Erzeugung einer Nebellichtverteilung mit horizontaler Helldunkelgrenze ausgebildet sein. In dieser Druckschrift geht es insbesondere darum, das von zwei separaten Reflektoren ausgesandte Licht von außen betrachtet als eine einheitlich leuchtende Fläche erscheinen zu lassen. Auf die Art und Weise der Erzeugung der Helldunkelgrenze der resultierenden Lichtverteilung wird in der Druckschrift nicht näher eingegangen. Die Reflexionsflächen der Reflektoren sind in mehrere Facetten segmentiert, wobei seitliche Facetten zur zusätzlichen Seitenausleuchtung und/oder Overheadbeleuchtung vorgesehen sind. Da jedem Reflektor nur eine LED zugeordnet ist, sind alle Facetten eines Reflektors zwangsläufig ausschließlich der einen LED zugeordnet.

Aus der JP 2010 165531 A ist die Erzeugung eines Lichtverlaufs unter Verwendung von Blenden bekannt.

Die DE 20 2010 003058 U1 beschreibt die Verwendung zueinander beabstandeter Reflektoren um eine gewünschte Lichtverteilung zu erzeugen.

Aus der US 2009/207625 A1 ist eine in ihrer Funktion mechanisch verstellbare Beleuchtungsvorrichtung bekannt.

Ein Fahrzeugfrontscheinwerfer mit einer Linse und einem Reflektor ist aus der US 2011/222303 A1 bekannt.

In der US 2005/041436 A1 ist Fahrzeugfrontscheinwerfer mit einem Reflektor bekannt der das Licht einer Mehrzahl an LEDs reflektiert.

Die EP 2 386 795 A1 beschreibt eine Beleuchtungseinrichtung, bei der das Licht einer Kante einer lichtemittierenden Oberfläche über einen Reflektor zur Erzeugung mehrerer Grenzlinien reflektiert wird.

Die JP 61 197601 U offenbart eine Lichtverteilung, die aus vier nebeneinander liegenden Abschnitten besteht, welche jeweils von einer Lichteinheit erzeugt werden.

Es besteht ein Bedürfnis, mit LED-Einzel-Chip Lichtquellen, die günstiger sind und positionsmäßig auf die Reflektoren besser abgestimmt werden können, und mit einer geringen Anzahl an Komponenten eine möglichst gute abgeblendete Lichtverteilung zu erzeugen.

Ausgehend von dem beschriebenen Stand der Technik liegt der vorliegenden Erfindung die Aufgabe zugrunde, eine schärfere Helldunkelgrenze zu erzeugen. Insbesondere soll der Gradient der Lichtintensität im Bereich der Helldunkelgrenze erhöht werden. Dazu ist es erforderlich, mehr von den LEDs ausgesandtes und von den Reflektoren reflektiertes Licht von unterhalb der Helldunkelgrenze bis dicht an die Helldunkelgrenze heranzuführen.

Diese Aufgabe wird mit den Merkmalen des Anspruchs 1 gelöst. Dabei ist die Helldunkelgrenze der Lichtverteilung in mehrere nebeneinander liegende Abschnitte unterteilt, wobei das LED-Modul derart ausgebildet ist, dass zumindest einigen der LEDs jeweils eines der Reflektorsegmente primär zugeordnet ist und diese LEDs im Zusammenwirken mit dem ihnen primär zugeordneten Reflektorsegment einen Bereich der Lichtverteilung ausleuchten, der einen bestimmten Abschnitt der Helldunkelgrenze erzeugt, und das die Summe dieser LEDs mit den ihnen jeweils primär zugeordneten Reflektorsegementen die gesamte Helldunkelgrenze erzeugt, und dass jede der LEDs im Zusammenwirken mit mindestens einem anderen, der LED sekundär zugeordneten Reflektorsegment mindestens einen anderen Bereich der Lichtverteilung ausleuchtet, dessen oberer Rand nicht zur Bildung der Helldunkelgrenze beiträgt.

Durch diese Ausgestaltung des LED-Moduls ist es möglich, besonders viel des von den LEDs ausgesandten und von den den LEDs primär zugeordneten Reflektorsegmenten reflektierten Lichts bis dicht an die Helldunkelgrenze zu führen. Dies ist möglich, indem die Form der Reflexionsfläche der einzelnen Reflektorsegmente gezielt auf die Position, Anordnung und Ausrichtung der ihnen primär zugeordneten LED abgestimmt ist. Die Reflexionsflächen der Reflektoren haben erfindungsgemäß eine paraboloide oder paraboloidähnliche Form. Insbesondere haben die Reflexionsflächen eine Freiform, die der Form eines Paraboloids ähnlich ist. Die Freiform einer Reflexionsfläche kann bspw. dadurch berechnet werden, dass ausgehend von einer Paraboloidform für diskrete Punkte jeweils eine Abweichung der Reflexionsfläche ermittelt wird, die erforderlich ist, damit das von der Reflexionsfläche einen vorgegebenen Bereich der Lichtverteilung mit einer vorgegeben Intensitätsverteilung ausleuchtet. In dem vorliegenden Fall kann die Freiform der Reflexionsfläche eines Segments dadurch so ausgebildet werden, dass bei gegebener Position und Ausrichtung der dem Segment primär zugeordneten LED durch das von dem Segment reflektierte Licht ein vorgegebener Bereich der Lichtverteilung ausgeleuchtet wird, der einen vorgegebenen Abschnitt der Helldunkelgrenze erzeugt. Die Reflexionsfläche wird in eine Vielzahl von Punkten unterteilt, wobei jeder Reflektorpunkt (mit einer gedachten kleinen Reflexionsfläche um ihn herum) die rechteckige LED-Leuchtfläche in die Lichtverteilung abbildet. Mittels eines mathematischen Algorithmus in einem optischen Berechnungsprogramm wird ein Raster von Reflektorpunkten so gegenüber seiner ursprünglichen Lage in der Ausgangsfläche (z.B. einem Paraboloid) verändert, dass die obere gerade Kante der LED-Abbildung in der Lichtverteilung möglichst nahe an der gewünschten Helldunkelgrenze liegt. Anschließend wird zwischen den diskret berechneten Punkten interpoliert und man erhält eine Freiform der Reflexionsfläche, die mehr oder weniger von einem Paraboloid abweichen kann. Dabei geht wieder ein wenig an Optimierungspräzision bzgl. der Helldunkelgrenze verloren.

Je genauer die Optimierung gelingt und für je größere Segmentbereiche sie durchgeführt wird, desto schärfer wird die Helldunkelgrenze und desto höher wird ihr Kontrast. Die Ausdehnung des erzeugten Helldunkelgrenzenabschnitts in horizontaler Richtung wird durch die Flächenform des Segmentes in horizontaler Richtung bestimmt. Wird mit einem begrenzten Segment ein zu großer Abschnitt der Helldunkelgrenze erzeugt, reduziert sich ihr Kontrast entsprechend. Ist ein Reflektorsegment bezüglich der Helldunkelgrenze optimiert, so kann dieses Segment in der Regel nicht gleichzeitig für eine andere LED-Leuchtfläche optimiert sein.

Die im Wesentlichen horizontale Helldunkelgrenze im Sinne der vorliegenden Erfindung umfasst verschiedene mögliche Ausgestaltungen der Helldunkelgrenze. Sie kann zum Einen vollständig, d.h. über ihre gesamte Erstreckung, horizontal verlaufen, wie dies bspw. bei einem Nebellicht, einem Abblendlicht-Grundlicht oder einem statischen Kurvenlicht der Fall sein kann. Es ist aber auch denkbar, dass die Helldunkelgrenze einen asymmetrischen Verlauf mit einem höheren Abschnitt auf der eigenen Verkehrsseite und einem niedrigeren Abschnitt auf der Gegenverkehrsseite aufweist. Der niedrigere Abschnitt der Helldunkelgrenze auf der Gegenverkehrsseite ist vorzugsweise durch einen ersten horizontalen Abschnitt auf der Gegenverkehrsseite gebildet. Der höhere Abschnitt der Helldunkelgrenze auf der eigenen Verkehrsseite ist vorzugsweise durch einen weiteren horizontalen Abschnitt auf der eigenen Verkehrsseite, der oberhalb des ersten horizontalen Abschnitts verläuft, gebildet. Zwischen den beiden horizontalen Abschnitten kann ein Übergangsabschnitt ausgebildet sein. Der Übergangsabschnitt kann einen im Wesentlichen senkrechten Verlauf aufweisen, bspw. wie bei Abblendlicht gemäß der in Nordamerika geltenden SAE-Regelung. Es ist aber auch denkbar, dass der Übergang einen schrägen Verlauf aufweist, insbesondere einen 15°-Anstieg bildet, bspw. wie bei Abblendlicht gemäß der in Europa geltenden ECE-Regelung. Ferner ist es denkbar, dass der an den horizontalen Abschnitt auf der Gegenverkehrsseite anschließende schräg verlaufende Abschnitt nicht nur einen Übergangsabschnitt, sondern auch den höheren Abschnitt auf der eigenen Verkehrsseite bildet. Dazu ist der schräg verlaufende Abschnitt einfach über die eigene Verkehrsseite hinaus verlängert.

Eine primäre Zuordnung zwischen LED und Reflektorsegment im Sinne der vorliegenden Erfindung liegt vor, wenn das von der LED ausgesandte und von dem primär zugeordneten Segment reflektierte Licht einen Teil der Lichtverteilung mit einem bestimmten Abschnitt der Helldunkelgrenze erzeugt. Dieser Abschnitt der Helldunkelgrenze liegt auf der oben beschriebenen Helldunkelgrenze einer ECE-Abblendlichtverteilung (oder einem anderen Typ von Helldunkelgrenze), ist aber in seiner Abschnittsunterteilung unabhängig von den dort beschriebenen horizontalen Abschnitten. Es wäre bspw. denkbar, dass der horizontale Abschnitt auf der Gegenverkehrsseite in zwei Abschnitte gemäß der vorliegenden Erfindung unterteilt ist, die jeweils von unterschiedlichen LEDs im Zusammenwirken mit den ihnen jeweils primär zugeordneten Reflektorsegmenten erzeugt werden.

Eine Segmentierung der Reflektoren im Sinne der vorliegenden Erfindung bedeutet, dass ein Segment einen zusammenhängenden Reflektorbereich bezeichnet, der in Zusammenwirkung mit einer LED eine zusammenhängende Teillichtverteilung in einem bestimmten Bereich der Gesamtlichtverteilung erzeugt. Verschiedene Segmente sind in der Regel, aber nicht zwangsläufig, durch Stufen oder Knicke an ihren Flächengrenzen getrennt.

Durch die vorliegende Erfindung ist es möglich, durch eine besondere Ausgestaltung der Reflexionsflächen der den LEDs primär zugeordneten Reflektorsegmente die Helldunkelgrenze Abschnitt für Abschnitte individuell auszubilden, damit in der Gesamtheit aller Helldunkelgrenzen-Abschnitte eine optimale Helldunkelgrenze erzeugt wird. Alle Teilbereiche der Lichtverteilung sollten sich zudem zu einer homogenen Gesamtlichtverteilung überlagern.

Erfindungsgemäß ist der obere Rand des von jeder der LEDs im Zusammenwirken mit den sekundär zugeordneten Reflektorsegmenten ausgeleuchteten Bereichs unterhalb und in einem Abstand zu der Helldunkelgrenze angeordnet. Eine sekundäre Zuordnung zwischen LED und Reflektorsegment im Sinne der vorliegenden Erfindung liegt vor, wenn das von der LED ausgesandte und von einem sekundär zugeordneten Segment reflektierte Licht einen Bereich der Lichtverteilung ausleuchtet, der räumlich entfernt von dem im Zusammenwirken mit dem der LED primär zugeordneten Reflektorsegment ausgeleuchteten Bereich zur Erzeugung eines Abschnitts der Helldunkelgrenze liegt. Durch das von den den LEDs sekundär zugeordneten Reflektorsegmenten reflektierte Licht können also die Bereiche der Lichtverteilung mit Abstand von der Helldunkelgrenze, bspw. in den Seitenbereichen am Fahrbahnrand, im Vorfeld unmittelbar vor dem Kraftfahrzeug, ausgeleuchtet werden. In einer nicht erfindungsgemäßen Ausführungsform wäre es auch denkbar, dass jede der LEDs im Zusammenwirken mit mindestens einem anderen, der LED sekundär zugeordneten Reflektorsegment mindestens einen Overheadbereich der Lichtverteilung oberhalb und in einem Abstand zu der Helldunkelgrenze ausleuchtet.

Gemäß einer bevorzugten Ausführungsform der Erfindung wird vorgeschlagen, dass die Reflexionsflächen der Reflektoren in mehrere Facetten facettiert sind. Facetten sind häufig gleich oder zumindest ähnlich geformt. Ein Beispiel für eine Facettierung ist eine Unterteilung der Reflexionsflächen in etwa gleich breite vertikale Facetten, die sich über die gesamte Höhe der Reflektoren jeweils von oben nach unten erstrecken.

Besonders bevorzugt ist es, dass das LED-Modul zur Erzeugung einer Abblendlicht-, einer Nebellicht- oder einer statischen Kurvenlichtverteilung ausgebildet ist. All diese Lichtverteilung verfügen über eine horizontale Helldunkelgrenze, die durch das erfindungsgemäße Lichtmodul besonders scharf ausgebildet werden kann.

Gemäß einer anderen vorteilhaften Weiterbildung der vorliegenden Erfindung sind jedem Reflektor mindestens zwei separate Einzel-LEDs zugeordnet. Die verwendeten Einzel-LEDs unterscheiden sich von in einer Matrix oder einem Array angeordneten LEDs insbesondere dadurch, dass die mindestens zwei Einzel-LEDs in einem größeren Abstand zueinander angeordnet sind. Bei den Einzel-LEDs handelt es sich um die LED-Chips, die zunächst noch nicht auf einer Leiterplatte angeordnet und kontaktiert sind. Das gibt dem Hersteller des LED-Moduls eine größere Flexibilität bei der Anordnung der LEDs in dem LED-Modul und bei der Ausgestaltung des gesamten LED-Moduls, insbesondere der Reflexionsflächen der Reflektoren.

Vorzugsweise sind jedem Reflektor zwei bis vier LEDs zugeordnet. Denkbar sind somit die folgenden Kombinationen: dem einen Reflektor sind zwei LEDs und dem anderen Reflektor ebenfalls zwei LEDS zugeordnet; dem einen Reflektor sind zwei LEDs und dem anderen Reflektor drei LEDs zugeordnet; dem einen Reflektor sind zwei LEDs und dem anderen Reflektor vier LEDs zugeordnet; dem einen Reflektor sind drei LEDs und dem anderen Reflektor ebenfalls drei LEDs zugeordnet; dem einen Reflektor sind drei LEDs und dem anderen Reflektor vier LEDs zugeordnet; und schließlich dem einen Reflektor sind vier LEDs und dem anderen Reflektor ebenfalls vier LEDs zugeordnet. Mit der Anzahl der LEDs steigt auch die Anzahl der Abschnitte, in die die Helldunkelgrenze unterteilt werden kann und die durch eine bestimmte primär zugeordnete LED-Reflektorsegment-Kombination erzeugt werden können.

Selbstverständlich ist es auch denkbar, dass mehr Reflektorsegmente als LEDs vorgesehen sind. In diesem Fall gäbe es dann Reflektorsegmente, die keiner der LEDs primär zugeordnet wären, die also keinen Beitrag zur Erzeugung eines Abschnitts der Helldunkelgrenze leisten. Diese Reflektorsegmente wären dann lediglich einer oder mehreren der LEDs sekundär zugeordnet und würden nur Bereiche der Lichtverteilung in einem Abstand zu der Helldunkelgrenze beleuchten.

Erfindungsgemäß ist jedes der einer LED primär zugeordneten Segmente der Reflektoren auf den Rand einer Leuchtfläche der dem Segment primär zugeordneten LED fokussiert. Dieser Rand der Leuchtfläche wird dann als der entsprechende, von der jeweiligen LED-Reflektorsegment-Kombination erzeugte Abschnitt der Helldunkelgrenze besonders scharf abgebildet. Diese Ausgestaltung dient also zur Erzeugung einer besonders scharf abgegrenzten Helldunkelgrenze mit einem großen Intensitätsgradienten an dem Hell-Dunkel-Übergang. Erfindungsgemäß ist jeweils ein äußeres Segment eines Reflektors auf einen vorderen, in Fahrtrichtung des Kraftfahrzeugs angeordneten Rand der Leuchtfläche der dem Segment primär zugeordneten LED fokussiert.

Die Schärfe der Helldunkelgrenze kann nochmals erhöht werden, wenn zumindest eine der LEDs entlang eines Randes ihrer Leuchtfläche, insbesondere entlang eines in Fahrtrichtung des Kraftfahrzeugs angeordneten vorderen Randes, mit einer höheren Intensität Licht abstrahlt als in anderen Bereichen ihrer Leuchtfläche. Die diesen LEDs primär zugeordneten Reflektorsegmente sind dann vorzugsweise auf den heller strahlenden Rand der Leuchtfläche der LEDs fokussiert, wodurch dieser hellere Rand den von der primär zugeordneten LED-Reflektorsegment-Kombination erzeugten Abschnitt der Helldunkelgrenze bildet.

Gemäß einer weiteren bevorzugten Ausgestaltung der Erfindung wird vorgeschlagen, dass das LED-Modul derart ausgebildet ist, dass das von dem ersten Reflektor reflektierte Licht eine breite Teillichtverteilung mit einer relativ großen horizontalen Erstreckung erzeugt, und das von dem zweiten Reflektor reflektierte Licht eine konzentrierte Teillichtverteilung mit einer geringeren horizontalen Erstreckung als die von dem ersten Reflektor erzeugte breite Teillichtverteilung erzeugt. Demnach erzeugen also die primär zugeordneten LED-Reflektorsegment-Kombinationen des ersten Reflektors die seitlichen Abschnitte der Helldunkelgrenze. Dementsprechend erzeugen die primär zugeordneten LED-Reflektorsegment-Kombinationen des zweiten Reflektors die zentralen Abschnitte der Helldunkelgrenze.

Alternativ wird vorgeschlagen, dass das LED-Modul derart ausgebildet ist, dass innerhalb eines Reflektors das von den äußeren Segmenten des Reflektors reflektierte Licht der ihnen primär zugeordneten LEDs eine breite Teillichtverteilung mit einer relativ großen horizontalen Erstreckung erzeugt, und das von den innenliegenden Segmenten des Reflektors reflektierte Licht der ihnen primär zugeordneten LEDs eine konzentrierte Teillichtverteilung mit einer geringeren horizontalen Erstreckung als die von den äußeren Segmenten erzeugte breite Teillichtverteilung erzeugt. Demnach erzeugen also die primär zugeordneten äußeren LED-Reflektorsegment-Kombinationen der Reflektoren die seitlichen Abschnitte der Helldunkelgrenze. Dementsprechend erzeugen die primär zugeordneten innenliegenden LED-Reflektorsegment-Kombinationen der Reflektoren die zentralen Abschnitte der Helldunkelgrenze.

Gemäß einer anderen vorteilhaften aber nicht erfindungsgemäßen Ausführungsform wird vorgeschlagen, dass den LEDs jeweils eine Vorsatzoptik aus einem transparenten Material zugeordnet ist, die derart ausgebildet ist, dass sie einen Großteil des Lichts bündelt, das von der ihr zugeordneten LED ausgesandt wurde, wobei die Bündelung des Lichts durch eine Brechung beim Einkoppeln des Lichts in die Vorsatzoptik, durch eine Brechung beim Auskoppeln des Lichts aus der Vorsatzoptik und/oder durch Totalreflexion des eingekoppelten Lichts an äußeren Grenzflächen der Vorsatzoptik erfolgt. Derartige Vorsatzoptiken werden auch als TIR (Total Internal Reflection)-Optiken bezeichnet. Mehrere Vorsatzoptiken, insbesondere die Vorsatzoptiken der LEDs eines Reflektors, können zu einem Optikarray zusammengefasst sein und sogar als ein gemeinsames Bauteil einstückig ausgebildet sein.

Vorteilhafterweise ist die Vorsatzoptik derart ausgebildet, dass sie jeweils das Licht, das von der ihr zugeordneten LED ausgesandt wurde, zumindest teilweise auf das der LED primär zugeordnete Segment des Reflektors lenkt. Auf diese Weise kann ein besonders großer Teil des von den LEDs ausgesandten Lichts auf die ihnen primär zugeordneten Reflektorsegmente gelenkt werden; entsprechend weniger Licht gelangt dann auf die den LEDs sekundär zugeordneten Segmente. Durch die Anordnung und Ausgestaltung der Vorsatzoptiken kann also die erzeugte Lichtverteilung, insbesondere die Ausgestaltung der Helldunkelgrenze, mit beeinflusst werden.

Gemäß einer weiteren bevorzugten Ausführungsform der Erfindung wird vorgeschlagen, dass den Reflexionsflächen von zumindest einigen der Segmente der Reflektoren eine Feinstruktur, vorzugsweise eine Wellenstruktur, überlagert ist, die derart ausgebildet ist, dass von den mit der Struktur versehenen Segmenten reflektiertes Licht zur Homogenisierung und Verbesserung der Lichtverteilung gestreut wird. Insbesondere kann das Licht in vertikaler Richtung, vorzugsweise in ein Vorfeld der Lichtverteilung unmittelbar vor dem Kraftfahrzeug, gestreut werden. Die Wellenstruktur kann auf der gesamten Reflexionsfläche eines Reflektorsegments oder nur auf einem Teil der Reflexionsfläche ausgebildet sein. Sie sorgt für eine Streuung des reflektierten Lichts, insbesondere für ein Verwischen des reflektierten Lichts nach unten in Richtung Vorfeld der Lichtverteilung.

Um bestimmte Abschnitte der Helldunkelgrenze bzw. die die Helldunkelgrenze bildenden Bereiche der Lichtverteilung und/oder bestimmte andere Bereiche in einem Abstand zu und vorzugsweise unterhalb der Helldunkelgrenze der Lichtverteilung gezielt heller oder dunkler zu machen, wird schließlich vorgeschlagen, dass das LED-Modul Mittel zur Variation eines jeweils eine einzelne LED speisenden elektrischen Stroms aufweist. Der Betriebsstrom kann demnach individuell für jede LED eingestellt werden, um die Helligkeit der LED zu verändern und gezielt Bereiche der Lichtverteilung mit größerer oder geringerer Intensität auszuleuchten. Auf diese Weise wäre es bspw. möglich, eine Blendung anderer Verkehrsteilnehmer, die bspw. mittels einer Kamera oder auf sonstige Weise detektiert werden können, gezielt zu vermeiden, indem diejenigen LEDs gedimmt werden, in deren ausgeleuchtetem Bereich ein Verkehrsteilnehmer detektiert wurde, ohne dass die gesamte Lichtverteilung abgedunkelt oder nach unten verschwenkt werden muss. Ferner wäre es dadurch möglich, die Intensität einer Seitenausleuchtung bspw. bei Kurvenfahrt oder beim Abbiegen gezielt zu erhöhen.

Das LED-Modul ist vorzugsweise in einem Gehäuse einer Beleuchtungseinrichtung eines Kraftfahrzeugs angeordnet. Dabei kann es sich um einen Hauptscheinwerfer oder um einen separat am Kraftfahrzeug angeordneten Hilfsscheinwerfer, bspw. zur Erzeugung von Nebellicht oder statischem Kurvenlicht, handeln. Das LED-Modul kann in horizontaler und/oder vertikaler Richtung verschwenkbar in dem Gehäuse gelagert sein. Dadurch kann eine dynamische Kurvenlichtfunktion bzw. eine Leuchtweiteregelung realisiert werden.

Weitere Merkmale und Vorteile der Erfindung werden nachfolgend anhand der Figurenbeschreibung unter Bezugnahme auf die Figuren näher erläutert. Diese zeigen:
- Fig. 1: eine perspektivische Ansicht eines erfindungsgemäßen LED-Moduls;
- Fig. 2: eine Vorderansicht des LED-Moduls aus Figur 1;
- Fig. 3: eine Draufsicht des LED-Moduls aus Figur 1, allerdings ohne Kühlkörper;
- Fig. 4a: ein erfindungsgemäßes LED-Modul in einer schematischen Ansicht von vorne;
- Fig. 4b: einen Messschirm mit durch Reflektorsegmente der Reflektoren des LED-Moduls aus Figur 4a erzeugten ausgeleuchteten Bereichen;
- Fig. 5: einen Reflektor des LED-Moduls aus Fig. 4a samt den Reflektorsegmenten zugeordneten LEDs zur Veranschaulichung der Fokussierung der Reflektorsegmente;
- Fig. 6: eine durch einen ersten Reflektor des LED-Moduls im Zusammenwirken mit einer ersten LED erzeugte schematische Lichtverteilung;
- Fig. 7: eine durch einen ersten Reflektor des LED-Moduls im Zusammenwirken mit einer zweiten LED erzeugte schematische Lichtverteilung;
- Fig. 8: eine durch einen ersten Reflektor des LED-Moduls im Zusammenwirken mit einer dritten LED erzeugte schematische Lichtverteilung; und
- Fig. 9: eine durch einen zweiten Reflektor des LED-Moduls im Zusammenwirken mit einer vierten LED erzeugte schematische Lichtverteilung;
- Fig. 10: eine durch einen zweiten Reflektor des LED-Moduls im Zusammenwirken mit einer fünften LED erzeugte schematische Lichtverteilung;
- Fig. 11: eine resultierende Lichtverteilung des gesamten erfindungsgemäßen LED-Moduls; und
- Fig. 12: einen Kraftfahrzeugscheinwerfer mit einem erfindungsgemäßen LED-Modul.

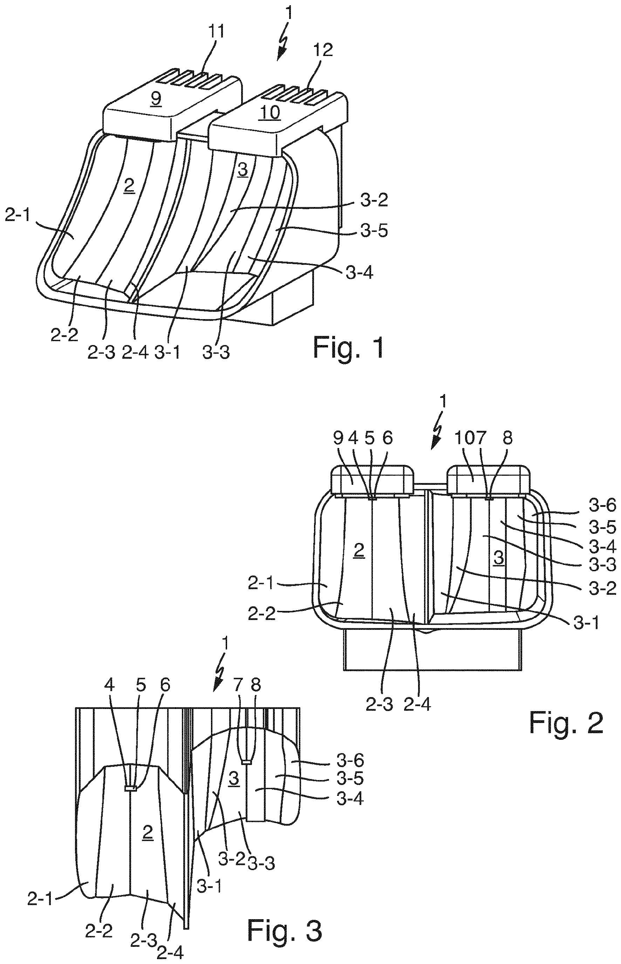

In Figur 1 ist ein erfindungsgemäßes LED-Modul in perspektivischer Ansicht in seiner Gesamtheit mit dem Bezugszeichen 1 bezeichnet. Bei dem LED-Modul 1 handelt es sich vorzugsweise um ein LED-Modul eines Kraftfahrzeugscheinwerfers, das als resultierende Lichtverteilung eine abgeblendete Lichtverteilung zur Ausleuchtung eines Fahrbahnbereichs vor dem Kraftfahrzeug erzeugt. Die abgeblendete Lichtverteilung kann ein herkömmliches Abblendlicht mit einer asymmetrischen Helldunkelgrenze sein. Die asymmetrische Helldunkelgrenze weist beispielsweise auf der Gegenverkehrsseite einen ersten horizontalen Abschnitt und auf der eigenen Verkehrsseite einen zweiten, oberhalb des ersten Abschnitts angeordneten horizontalen Abschnitt auf. Zwischen dem ersten und dem zweiten horizontalen Abschnitt ist ein Übergangsabschnitt vorgesehen. Der Übergangsabschnitt kann einen 15°-Anstieg, wie in Europa üblich (vergl. die ECE-Regelung), oder einen senkrechten Abschnitt aufweisen, wie in den USA üblich (vergl. die SAE-Regelung). In dem vorliegenden Ausführungsbeispiel wird davon ausgegangen, dass das LED-Modul 1 zur Erzeugung einer abgeblendeten Lichtverteilung gemäß ECE-Regelung ausgebildet ist.

Selbstverständlich können mit dem LED-Modul 1 aber auch beliebig andere abgeblendete Lichtverteilungen, beispielsweise ein Nebellicht oder eine Abblendlicht-Spotlichtverteilung oder eine Abblendlicht-Grundlichtverteilung erzeugt werden.

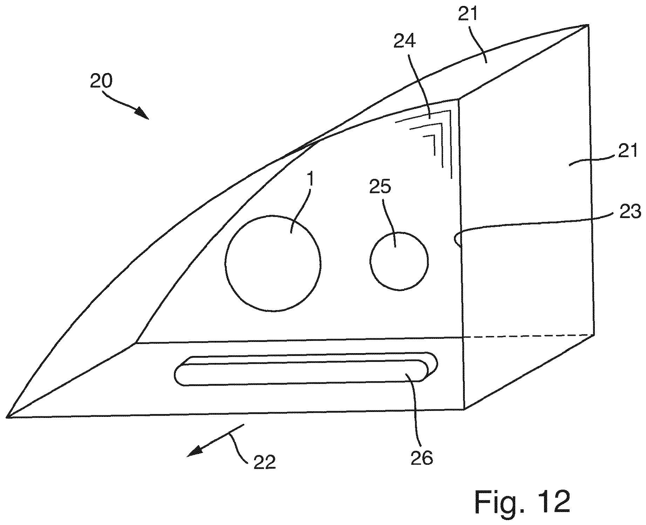

Ein Scheinwerfer, in dem das LED-Modul 1 eingebaut sein kann, ist beispielhaft in Figur 12 gezeigt und in seiner Gesamtheit mit dem Bezugszeichen 20 bezeichnet. Der Scheinwerfer 20 weist ein Gehäuse 21 auf, das vorzugsweise aus Kunststoff gefertigt ist. Das Gehäuse 21 weist in einer Lichtaustrittsrichtung 22 eine Lichtaustrittsöffnung 23 auf, die durch eine transparente Abdeckscheibe 24 verschlossen ist. Die Abdeckscheibe 24 kann zumindest bereichsweise mit optisch wirksamen Elementen (z.B. Prismen oder Zylinderlinsen) versehen sein, die eine Streuung des hindurchtretenden Lichts bewirken (sog. Streuscheibe). Es ist aber auch denkbar, dass die Abdeckscheibe 24 ohne solche optisch wirksamen Elemente ausgebildet ist (sog. klare Scheibe). Im Inneren des Gehäuses 21 ist das LED-Modul 1 angeordnet. Das LED-Modul 1 kann um eine vertikale und/oder um eine horizontale Achse verschwenkbar in dem Gehäuse 21 gelagert sein. Außer dem LED-Modul 1 können noch andere Lichtmodule in dem Gehäuse 21 angeordnet sein, die bspw. eine beliebige Scheinwerferfunktion (z.B. Fernlicht, Zusatzfernlicht, Abblendlicht, Nebellicht, eine beliebige adaptive Lichtverteilung, etc.) realisieren können. Diese anderen Lichtmodule sind in Figur 12 beispielhaft durch das Lichtmodul 25 angedeutet. Außerdem können in dem Gehäuse 21 noch Leuchtenmodule 26 angeordnet sein, die zur Erzeugung einer beliebigen Leuchtenfunktion (z.B. Blinklicht, Positionslicht, Tagfahrlicht, etc.) dienen.

Das erfindungsgemäße LED-Modul 1 umfasst mindestens zwei Reflektoren 2, 3, die vorzugsweise nebeneinander angeordnet sind. Eine Reflexionsfläche der Reflektoren 2, 3 ist vorzugsweise parabolisch oder paraboloid-ähnlich ausgebildet. Eine paraboloid-ähnliche Form der Reflexionsfläche kann beispielsweise als eine sogenannte Freiform ausgebildet sein, die mittels eines numerischen Verfahrens an diskreten Punkten der Reflexionsfläche mit dem Ziel berechnet wird, durch die resultierende Reflexionsfläche eine bestimmte vorgegebene Lichtverteilung zu erzeugen. Nach dem Berechnen der diskreten Punkte der Reflexionsfläche, kann zwischen den berechneten Punkten interpoliert werden, um die Form der gesamten Reflexionsfläche zu erhalten.

Jeder der Reflektoren 2, 3 ist in mehrere Segmente 2-1, 2-2, 2-3, 2-4 bzw. 3-1, 3-2, 3-3, 3-4, 3-5 segmentiert. In dem dargestellten Ausführungsbeispiel weist das LED-Modul 1 lediglich zwei Reflektoren 2, 3 auf. Von vorne betrachtet (vgl. Figur 2) weisen die Reflektoren 2, 3 eine im Wesentlichen rechteckige Form auf.

An einem oberen Rand der Reflektoren 2, 3 sind je Reflektor 2, 3 mehrere Lichtquellen in Form von Halbleiterlichtquellen, insbesondere Leuchtdioden (LEDs), 4, 5, 6, 7, 8 auf einem Trägerelement 9, 10 angeordnet (vgl. Figuren 2 und 3). In dem dargestellten Ausführungsbeispiel sind dem linken Reflektor 2 beispielhaft drei LEDs 4, 5, 6 und dem rechten Reflektor 3 zwei LEDs 7, 8 zugeordnet. Selbstverständlich können den einzelnen Reflektoren 2, 3 auch eine davon abweichende Anzahl an LEDs zugeordnet sein. In dem dargestellten Ausführungsbeispiel sind die Trägerelemente 9, 10 für die LEDs 4 bis 8 integraler Bestandteil eines Kühlkörpers, 11, 12, der sich vorzugsweise an der Rückseite der Reflektoren 2, 3 erstreckt und in diesem Ausführungsbeispiel bis an die Oberseite der Reflektoren 2, 3 reicht. Selbstverständlich ist es aber auch denkbar, dass die Trägerelemente 9, 10 mit separat ausgestalteten Kühlkörpern 11, 12 lediglich wärmetechnisch leitend verbunden sind. In Figur 3 ist eine Draufsicht auf das LED-Modul 1 gezeigt, wobei die Trägerelemente 9, 10 der besseren Übersichtlichkeit halber nicht dargestellt sind.

Bei den für das LED-Modul 1 verwendeten Lichtquellen handelt es sich um sogenannte Einzel-LEDs und nicht um mehrere zu einer LED-Matrix oder einem LED-Array zusammengefasste LEDs. Dies hat den Vorteil, dass die einzelnen Reflektorsegmente 2-1 bis 2-4 bzw. 3-1 bis 3-6 besser individuell auf die einzelnen LEDs 4 bis 8 fokussiert werden können. Insbesondere ist vorgeschlagen, dass jeweils zumindest eines der Reflektorsegmente 2-1 bis 2-4 bzw. 3-1 bis 3-6 auf eine Kante des LED-Chips einer der Einzel-LEDs 4 bis 8 fokussiert ist. Dadurch bildet das Reflektorsegment 2-1 bis 2-4 bzw. 3-1 bis 3-6 die Kante derjenigen LEDs 4 bis 8 scharf ab, auf die das Reflektorsegment 2-1 bis 2-4 bzw. 3-1 bis 3-6 fokussiert ist. Diejenigen Reflektorsegmente 2-1 bis 2-4 bzw. 3-1 bis 3-6, die auf eine bestimmte LED 4 bis 8 fokussiert sind, werden als der entsprechenden LED 4 bis 8 primär zugeordnete Reflektorsegmente bezeichnet. Die übrigen Reflektorsegmente 2-1 bis 2-4 bzw. 3-1 bis 3-6, die nicht auf die entsprechende LED 4 bis 8 fokussiert sind, werden als der entsprechenden LED sekundär zugeordnete Reflektorsegmente bezeichnet.

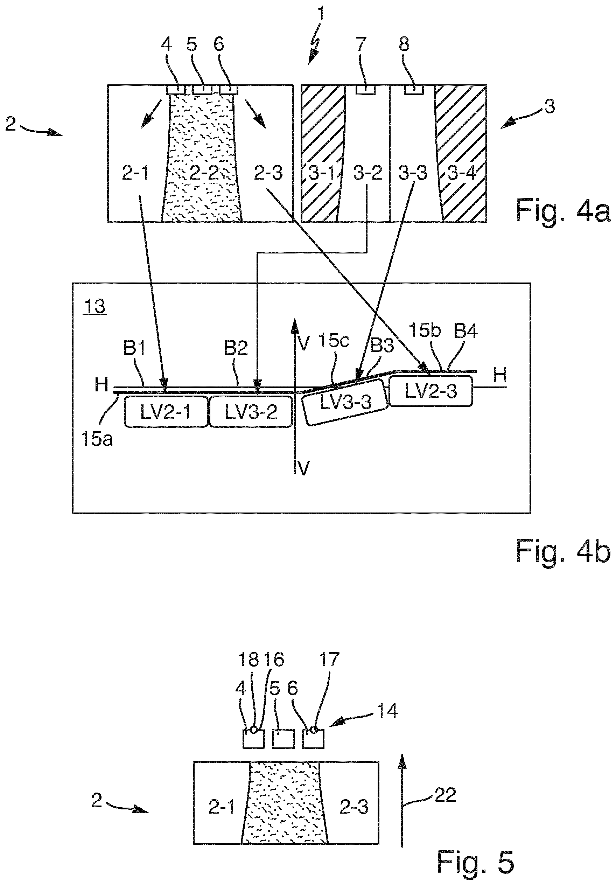

Anhand der Figuren 4 und 5 wird die primäre und sekundäre Zuordnung der Reflektorsegmente zu bestimmten LEDs 4 bis 8 näher erläutert. In Figur 4a ist ein Teil eines erfindungsgemäßen LED-Moduls 1 dargestellt, bei dem der linke Reflektor 2 in drei Reflektorsegmente 2-1, 2-2, 2-3 und der rechte Reflektor 3 in vier Reflektorsegmente 3-1, 3-2, 3-3 und 3-4 unterteilt ist. Das linke Reflektorsegment 2-1 des ersten Reflektors 2 ist der linken LED 4 und das rechte Reflektorsegment 2-3 des ersten Reflektors 2 der rechten LED 6 primär zugeordnet. In entsprechender Weise ist das linke Reflektorsegment 3-2 der mittleren beiden Reflektorsegmente 3-2, 3-3 des zweiten Reflektors 3 der linken LED 7 und das mittlere rechte Reflektorsegment 3-3 der rechten LED 8 primär zugeordnet. Demnach sind beispielsweise in dem ersten Reflektor 2 die Reflektorsegmente 2-2 und 2-3 der linken LED 4 sekundär zugeordnet. In entsprechender Weise sind die Reflektorsegmente 2-1, 2-2 der rechten LED 6 sekundär zugeordnet. Ebenso sind bei dem zweiten Reflektor 3 die linken Reflektorsegmente 3-1, 3-2 und das äußere rechte Reflektorsegment 3-4 der rechten LED 8 sekundär zugeordnet. Schließlich sind das äußere linke Reflektorsegment 3-1 sowie die beiden rechten Reflektorsegmente 3-3, 3-4 der linken LED 7 sekundär zugeordnet.

Die bestimmten LEDs 4, 6 bzw. 7, 8 primär zugeordneten Reflektorsegmente 2-1; 2-3 bzw. 3-2; 3-3 sind für die Erzeugung der Helldunkelgrenze der abgeblendeten Lichtverteilung von Bedeutung. In Figur 4b ist ein Messschirm 13 beispielhaft dargestellt. Auf dem Messschirm ist eine Horizontale HH und eine senkrecht zu dieser verlaufende Vertikale W eingezeichnet. Außerdem ist auf dem Messschirm 13 eine durch das LED-Modul 1 erzeugte Lichtverteilung mit asymmetrischer Helldunkelgrenze 15 gemäß ECE-Regelung mit einem 15°-Anstieg gezeigt. Die asymmetrische Helldunkelgrenze umfasst einen ersten horizontalen Abschnitt 15a auf der Gegenverkehrsseite und einen zweiten horizontalen Abschnitt 15b auf der eigenen Verkehrsseite, wobei der horizontale Albschnitt 15b auf der eigenen Verkehrsseite oberhalb des horizontalen Abschnitts 15a auf der Gegenverkehrsseite angeordnet ist. Ein Übergangsabschnitt 15c bildet den 15°-Anstieg zwischen den beiden horizontalen Abschnitten 15a, 15b. Obwohl sich die gezeigte Helldunkelgrenze 15 im Wesentlichen in horizontaler Richtung erstreckt, kann sie auch schräge oder kurze senkrechte Abschnitte aufweisen. Die Helldunkelgrenze 15 ist in verschiedene Abschnitte B1, B2, B3, B4 unterteilt. Die Unterteilung der Helldunkelgrenze 15 in die Abschnitte B1, B2, B3, B4 ist unabhängig von den horizontalen und Übergangs-Abschnitten 15a, 15b, 15c. Selbstverständlich wäre es auch denkbar, die Helldunkelgrenze 15 in mehr oder weniger als die dargestellten vier Abschnitte B1, B2, B3, B4 zu unterteilen.

Die LED 4 leuchtet zusammen mit dem ihr primär zugeordneten Reflektorsegment 2-1 einen ersten Bereich LV2-1 aus, der den ersten Abschnitt B1 der Helldunkelgrenze 15 erzeugt. Ebenso reflektiert das Reflektorsegment 2-3 einen Großteil des von dem ihm primär zugeordneten LED 6 ausgesandten Lichts in einen Bereich LV2-3, der einen anderen Abschnitt B4 der Helldunkelgrenze 15 erzeugt. Das Reflektorsegment 3-2 leuchtet mit dem Licht der ihm primär zugeordneten LED 7 einen anderen Bereich LV3-2 der Lichtverteilung aus und erzeugt einen Abschnitt B2 der Helldunkelgrenze 15. Schließlich reflektiert das Reflektorsegment 3-3 das von der ihm primär zugeordneten LED 8 ausgesandte Licht größtenteils in einen Bereich LV3-3 und erzeugt dadurch einen Abschnitt B3 der Helldunkelgrenze 15. In dem dargestellten Ausführungsbeispiel ist es vorgesehen, dass die Reflektorsegmente 2-1, 2-3 des ersten Reflektors 2 zusammen mit den ihnen primär zugeordneten LEDs 4, 6 äußere Abschnitte B1, B4 der Helldunkelgrenze 15 erzeugen. Dem entsprechend erzeugen die Reflektorsegmente 3-2, 3-3 des zweiten Reflektors 3 zusammen mit den ihnen primär zugeordneten LEDs 7, 8 einen zentralen Abschnitt B2 bzw. B3 der Helldunkelgrenze 15 in der Nähe, vorzugsweise in der unmittelbaren Umgebung, der Vertikalen W.

Figur 5 zeigt beispielhaft eine Ansicht von unten auf den ersten Reflektor 2 mit den LEDs 4 bis 6. Eine Fahrrichtung eines Kraftfahrzeugs, in dem das LED-Modul 1 verbaut ist, ist mit dem Bezugszeichen 22 bezeichnet. Man kann deutlich erkennen, dass beispielsweise das rechte Reflektorsegment 2-3 auf einen fahrtrichtungsseitigen Vorderrand 14 der dem Reflektorsegment 2-3 primär zugeordneten LED 6 fokussiert ist. Der entsprechende Brennpunkt des Reflektorsegments 2-3 ist mit dem Bezugszeichen 17 bezeichnet. Dementsprechend ist das linke Reflektorsegment 2-1 auf einen fahrtrichtungsseitigen Rand 16 der dem Reflektorsegment 2-1 primär zugeordneten LED 4 fokussiert. Der entsprechende Brennpunkt des Reflektorsegments 2-1 ist mit dem Bezugszeichen 18 bezeichnet. Somit wird der fahrtrichtungsseitige Rand 14; 16 der LEDs 4; 6 zur Erzeugung der Abschnitte B1, B4 der Helldunkelgrenze 15 unmittelbar unterhalb bzw. sogar auf der Helldunkelgrenze 15 abgebildet. Dadurch kann eine besonders scharfe Helldunkelgrenze 15 erzeugt werden. Dementsprechend sind auch die Reflektorsegmente 3-2, 3-3 des rechten Reflektors 3 auf die ihnen jeweils zugeordneten LEDs 7, 8 bzw. auf deren fahrtrichtungsseitigen vorderen Rand fokussiert.

Besonders bevorzugt ist es in diesem Zusammenhang, wenn zumindest eine der LEDs 4, 6; 7, 8 entlang eines Randes ihrer Leuchtfläche, insbesondere entlang des in Fahrtrichtung 22 des Kraftfahrzeugs angeordneten vorderen Randes 14, 16 der Leuchtfläche, mit einer höheren Intensität Licht abstrahlt als in anderen Bereichen ihrer Leuchtfläche.

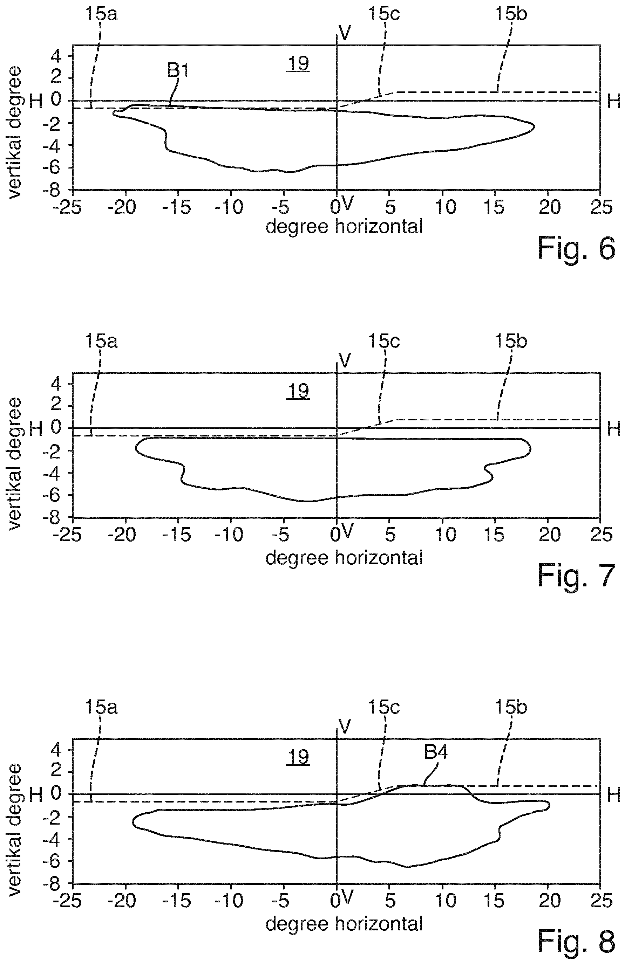

In Figur 6 ist beispielhaft für das LED-Modul 1 aus Figur 4a eine Teil-Lichtverteilung dargestellt, die von der ersten LED 4 im Zusammenwirken mit sämtlichen Reflektorsegmenten 2-1, 2-2, 2-3 des ersten Reflektors 2 erzeugt wird. Die Teil-Lichtverteilung ist auf einem Messschirm 19 dargestellt, der in einem Abstand zu dem LED-Modul 1 bzw. zu dem Kraftfahrzeug vor diesem angeordnet ist. Auf dem Messschirm 19 ist eine Horizontale HH und eine diese senkrecht schneidende Vertikale W eingezeichnet. Ferner ist auf dem Messschirm 19 die Helldunkelgrenze 15 als gestrichelte Linie eingezeichnet, wobei der Abschnitt 15a auf der Gegenverkehrsseite etwa 0,5° (genau 0,57°) unterhalb der Horizontalen HH und der horizontale Abschnitt 15b auf der eigenen Verkehrsseite etwa 1° oberhalb der Horizontalen HH verläuft. Der ansteigende Abschnitt 15c geht aus von dem horizontalen Abschnitt 15a auf der Gegenverkehrsseite bei etwa 0° horizontal und erstreckt sich in einem 15°-Winkel bis zum Erreichen des horizontalen Abschnitts 15b auf der eigenen Verkehrsseite bei etwa 6° horizontal.

Man erkennt in der Teil-Lichtverteilung aus Figur 6 deutlich den Abschnitt B1 der Helldunkelgrenze 15, der von der ersten LED 4 im Zusammenwirken mit dem ersten Reflektorsegment 2-1, das der LED 4 primär zugeordnet ist, erzeugt wird. Das von den übrigen Reflektorsegmenten 2-2, 2-3, die der ersten LED 4 lediglich sekundär zugeordnet sind, reflektierte Licht erzeugt keinen weiteren Abschnitt der Helldunkelgrenze 15, sondern leuchtet lediglich andere Bereiche der Lichtverteilung aus, die unterhalb der Helldunkelgrenze 15 liegen.

In Figur 7 ist eine Teil-Lichtverteilung auf dem Messschirm 19 dargestellt, die von der zweiten LED 5 im Zusammenwirken mit sämtlichen Reflektorsegmenten 2-1, 2-2, 2-3 des ersten Reflektors 2 erzeugt wird. Der LED 5 ist keines der Reflektorsegmente primär zugeordnet. Folglich erzeugt das von der LED 5 ausgesandte Licht auch keinen Abschnitt der Helldunkelgrenze 15, was dadurch zu erkennen ist, dass die Teil-Lichtverteilung an keiner Stelle einen Bereich der Helldunkelgrenze 15 bildet, sondern überall einen Abstand zu der Helldunkelgrenze 15 aufweist, und somit keinen Beitrag zur Helldunkelgrenze 15 liefert.

In Figur 8 ist eine weitere Teil-Lichtverteilung dargestellt, die sich durch die dritte LED 6 im Zusammenwirken mit sämtlichen Reflektorsegmenten 2-1, 2-2, 2-3 des ersten Reflektors 2 auf dem Messschirm 19 ergibt. Deutlich zu erkennen ist dabei, dass das von der LED 6 ausgesandte Licht im Zusammenwirken mit dem rechten Reflektorsegment 2-3, dem die LED 6 primär zugeordnet ist, einen Bereich LV2-3 der Teil-Lichtverteilung ausleuchtet, der den Abschnitt B4 der Helldunkelgrenze 15 erzeugt. Das von der LED 6 ausgesandte Licht leuchtet im Zusammenwirken mit den der LED 6 sekundär zugeordneten Reflektorsegmenten 2-1, 2-2 einen anderen Bereich der Lichtverteilung aus, der in einem Abstand zu der Helldunkelgrenze 15 angeordnet ist. Mit anderen Worten, die LED 6 leuchtet im Zusammenwirken mit den der LED 6 sekundär zugeordneten Reflektorsegmenten 2-1, 2-2 einen Bereich der Lichtverteilung aus, dessen oberer Rand in einem Abstand zu dem oberen Rand des durch das Zusammenwirken der LED 6 mit dem der LED 6 primär zugeordneten Reflektorsegment 2-3 ausgeleuchteten Bereichs LV2-3 liegt.

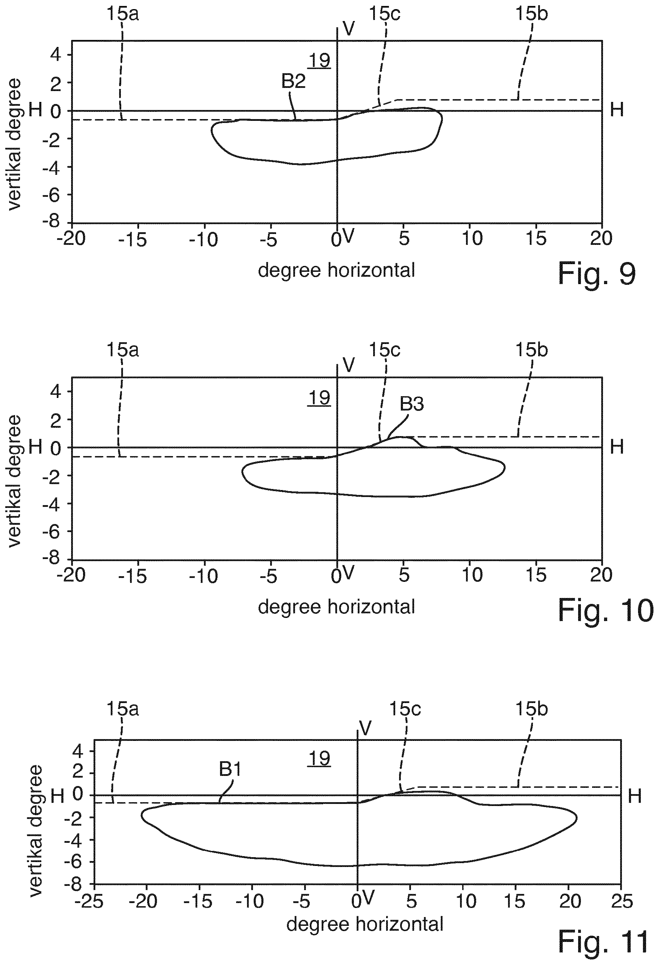

Figur 9 zeigt eine weitere Teil-Lichtverteilung auf einem Messschirm 19, die durch die LED 7 im Zusammenwirken mit sämtlichen Reflektorsegmenten 3-1 bis 3-4 des zweiten Reflektors 3 erzeugt wird. Dabei ist zu erkennen, dass das von der LED 7 ausgesandte Licht im Zusammenwirken mit dem der LED 7 primär zugeordneten Reflektorsegment 3-2 einen Bereich LV3-2 der Lichtverteilung ausleuchtet, der den Abschnitt B2 der Helldunkelgrenze 15 erzeugt. Das von der LED 7 ausgesandte Licht leuchtet ferner im Zusammenwirken mit den der LED 7 sekundär zugeordneten Reflektorsegmenten 3-1, 3-3, 3-4 andere Bereiche der Lichtverteilung aus, die in einem Abstand zu der Helldunkelgrenze 15 angeordnet sind. Mit anderen Worten, die LED 7 leuchtet im Zusammenwirken mit den der LED 7 sekundär zugeordneten Reflektorsegmenten 3-1, 3-3, 3-4 einen Bereich der Lichtverteilung aus, dessen oberer Rand in einem Abstand zu dem oberen Rand des durch das Zusammenwirken der LED 7 mit dem der LED 7 primär zugeordneten Reflektorsegment 3-2 ausgeleuchteten Bereichs LV3-2 liegt.

Schließlich ist in Figur 10 eine weitere Teil-Lichtverteilung auf dem Messschirm 19 dargestellt, die von der LED 8 im Zusammenwirken mit sämtlichen Reflektorsegmenten 3-1 bis 3-4 des zweiten Reflektors 3 erzeugt wird. Es ist gut zu erkennen, dass die LED 8 im Zusammenwirken mit dem der LED 8 primär zugeordneten Reflektorsegment 3-3 einen Bereich LV3-3 der Lichtverteilung ausleuchtet, der einen bestimmten Abschnitt B3 der Helldunkelgrenze 15 erzeugt. Ferner leuchtet die LED 8 im Zusammenwirken mit den anderen, der LED 8 sekundär zugeordneten Reflektorsegmenten 3-1, 3-2, 3-4 einen anderen Bereich der Lichtverteilung aus, dessen oberer Rand in einem Abstand zu dem oberen Rand des durch das Zusammenwirken der LED 8 mit dem der LED 8 primär zugeordneten Reflektorsegment 3-3 ausgeleuchteten Bereichs LV3-3 liegt.

In Figur 11 ist dann die Gesamtlichtverteilung dargestellt, die sich aus einer Überlagerung sämtlicher Teil-Lichtverteilungen aus den Figuren 6 bis 10 ergibt. Dabei erkennt man, dass die Summe aller LEDs 4 bis 8 und der ihnen jeweils primär zugeordneten Reflektorsegmente 2-1, 2-3, 3-2, 3-3 die gesamte Helldunkelgrenze 15 bzw. die entsprechenden Abschnitte B1, B2, B3, B4 der Helldunkelgrenze 15 erzeugt. Dadurch, dass jedes der primär zugeordneten Reflektorsegmente 2-1, 2-3, 3-2, 3-3 auf eine in Fahrtrichtung 22 angeordnete Vorderkante 14, 16 des LED-Chips der ihnen primär zugeordneten LEDs 4, 6, 7, 8 fokussiert werden kann, wird diese Vorderkante 14, 16 des LED-Chips zur Erzeugung des jeweiligen Abschnitts B1, B2, B3, B4 der Helldunkelgrenze 15 auf dem Messschirm 19 abgebildet, so dass sich eine besonders scharfe Helldunkelgrenze 15 ergibt.

Bei den zur Anwendung kommenden LEDs handelt es sich um sogenannte Einzel-LEDs mit vorzugsweise einem bzw. maximal zwei LED-Chips, die auf einem möglichst kompakten Trägerelement angeordnet sind. Während das von den LEDs 4, 6, 7, 8 ausgesandte Licht im Zusammenwirken mit den ihnen primär zugeordneten Reflektorsegmenten 2-1, 2-3, 3-2, 3-3 verschiedene Bereiche LV2-1, LV3-2, LV3-3, LV2-3 der Lichtverteilung zur Erzeugung der Abschnitte B1, B2, B3, B4 der Helldunkelgrenze 15 ausleuchten, leuchten die LEDs 4 bis 8 im Zusammenwirken mit den ihnen nicht primär, sondern allenfalls sekundär zugeordneten Reflektorsegmenten andere Bereiche der Lichtverteilung aus, die nicht unmittelbar an der Erzeugung der Helldunkelgrenze 15 beteiligt sind. Dies kann dadurch erreicht werden, dass in dem erfindungsgemäßen LED-Modul 1 Einzel-LEDs statt einer LED-Matrix verwendet werden, die jeweils in einem individuell vorgebbaren Abstand zu den ihnen jeweils primär zugeordneten Reflektorsegmenten angeordnet werden können. Der Kontrast an der Helldunkelgrenze 15 wird dadurch gebildet, dass die Abbilder der LED-Chips bzw. deren Leuchtfläche mit ihren, in Fahrtrichtung 22 weisenden Vorderkanten, nahe an bzw. sogar auf die Helldunkelgrenze 15 gelegt werden. Einer der beiden Reflektoren, in dem dargestellten Ausführungsbeispiel der zweite Reflektor 3, erzeugt tendenziell eine konzentrierte Lichtverteilung nahe der optischen Achse, die auf dem Messschirm 19 durch den Schnittpunkt der Horizontalen HH und der Vertikalen W verläuft (vergl. Figuren 9 und 10). Der andere Reflektor, in dem dargestellten Ausführungsbeispiel der erste Reflektor 2, erzeugt tendenziell eher eine etwas breiter gestreute Lichtverteilung (vergl. die Figuren 6 bis 8). Dies wird auch dadurch deutlich, dass die Reflektorsegmente 2-1, 2-3 des ersten Reflektors 2 die äußeren Abschnitte B1, B4 der Helldunkelgrenze 15 erzeugen, wohingegen die Reflektorsegmente 3-2, 3-3 des zweiten Reflektors 3 die zentralen Abschnitte B2, B3 der Helldunkelgrenze 15 erzeugen.

Es wird angemerkt, dass die Zuordnung der Reflektorsegmente 2-1 bis 3-4 zu den LEDs 4 bis 8 in den Figuren 4a bis 5 lediglich beispielhafter Natur ist. Selbstverständlich ist es denkbar, andere Reflektorsegmente anderen LEDs primär zuzuordnen, als in den Figuren dargestellt. Entscheidend ist, dass jeweils ein Abschnitt B1 bis B4 der Helldunkelgrenze 15 durch mindestens eine der LEDs 4 bis 8 im Zusammenwirken mit mindestens einem dieser LED 4 bis 8 primär zugeordneten Reflektorsegment 2-1 bis 3-4 erzeugt wird. Verschiedene LEDs 4 bis 8 erzeugen mit dem ihnen jeweils primär zugeordneten Reflektorsegmenten 2-1 bis 3-4 verschiedene Abschnitte B1 bis B4 der Helldunkelgrenze 15. Die Summe aller LEDs 4, 6, 7, 8, denen jeweils eines der Reflektorsegmente 2-1, 2-3, 3-2, 3-3 primär zugeordnet ist, erzeugt die gesamte Helldunkelgrenze 15. Dabei erstreckt sich die Helldunkelgrenze 15 im Wesentlichen in horizontaler Richtung, kann aber auch schräge oder kurze senkrechte Abschnitte aufweisen.

In einer weiteren Ausführungsform ist es denkbar, dass den LEDs 4 bis 8 jeweils eine Vorsatzoptik aus einem transparenten Kunststoff- oder Glasmaterial zugeordnet ist, die das von der ihr zugeordneten LED 4 bis 8 ausgesandte Licht bündelt. Vorzugsweise lenkt die Vorsatzoptik das gebündelte Licht in Richtung auf das der LED 4 bis 8 primär zugeordnete Reflektorsegment. Dadurch steht besonders viel Licht zur Erzeugung der Helldunkelgrenze 15 über die den LEDs 4 bis8 primär zugeordneten Reflektorsegmente 2-1 bis 3-4 zur Verfügung.

Ein LED-Chip einer LED 4 bis 8 weist normalerweise auf seiner leuchtenden Fläche ein in etwa gleichmäßiges Intensitätsprofil für das abgestrahlte Licht auf. Gemäß einer bevorzugten Ausführungsform ist es jedoch auch denkbar, LEDs einzusetzen, die nahe an einem Rand ihrer Leuchtfläche, bspw. an einem in Fahrtrichtung 22 weisenden Vorderrand 14, 16, der auf die Helldunkelgrenze 15 abgebildet wird, eine höhere Leuchtdichte aufweisen, als an anderen Stellen der Leuchtfläche. Dies kann zusätzliches Licht in den Bereich nahe unterhalb der Helldunkelgrenze 15 befördern.

Ferner ist es denkbar, dass einzelne Reflektorsegmente 2-1 bis 3-4 eine besondere Struktur aufweisen können, so dass der Lichtauslauf in das Vorfeld unmittelbar vor dem Kraftfahrzeug homogen erfolgt. Vorzugsweise handelt es sich bei der Struktur um eine Wellenstruktur, insbesondere um eine horizontale Wellenstruktur, bei der die einzelnen Wellen eine Längserstreckung im Wesentlichen in horizontaler Richtung aufweisen. Ferner wäre es denkbar, einem oder mehreren der Reflexionsflächen der Reflektorsegmente 2-1 bis 3-4 zumindest bereichsweise Wellen- oder andere Strukturen so zu überlagern oder Teilbereiche der Reflexionsflächen lokal so zu modifizieren, dass eine geringe Menge an Licht oberhalb der Helldunkelgrenze 15 gerichtet wird und zur Erzeugung einer Overhead-Lichtverteilung zum Ausleuchten und Erkennen von Verkehrszeichen und Schilderbrücken gerichtet wird.

Beide Reflektoren 2, 3 des erfindungsgemäßen LED-Moduls 1 sind so ausgelegt, dass einzelne Reflektorsegmente 2-1 bis 3-4 im Sinne der vorliegenden Erfindung zur Erzeugung von bestimmten Abschnitten B1 bis B4 der Helldunkelgrenze 15 zuständig sind. es ist auch denkbar, dass das von den äußeren Segmenten 2-1, 2-3 bzw. 3-1, 3-4 der Reflektoren 2, 3 ausgesandte Licht gegenüber der Helldunkelgrenze 15 abgesenkt wird, wobei nur die inneren Segmente 2-2, 3-2, 3-3 die Helldunkelgrenze 15 definieren würden (nicht dargestellt). Dementsprechend wäre es außerdem denkbar, dass das Licht der inneren Reflektorsegmente 2-2 bzw. 3-2, 3-3 gegenüber der Helldunkelgrenze 15 abgesenkt sein kann, so dass nur die äußeren Reflektorsegmente 2-1, 2-3 bzw. 3-1, 3-4 die Helldunkelgrenze 15 definieren würden (nicht dargestellt).

Selbstverständlich wäre es auch denkbar, dass die Reflektorsegmente 2-2, 3-1, 3-4 des Ausführungsbeispiels aus Figur 4a, die keiner der LEDs 4 bis 8 primär zugeordnet sind, ebenfalls einer bestimmten LED primär zugeordnet sind. Dies kann aber auch bewusst unterbleiben. So könnten beispielsweise die Reflektorsegmente 2-2, 3-1, 3-4, die keiner der LEDs 4 bis 8 primär zugeordnet sind, zur Erzeugung von bandartigen Grundlichtkomponenten zur Gesamtlichtverteilung beitragen.

In dem dargestellten Ausführungsbeispiel der Figur 4b ist die Helldunkelgrenze 15 durch insgesamt vier ausgeleuchtete Bereiche B1 bis B4 gebildet. Selbstverständlich ist es auch denkbar, die Helldunkelgrenze 15 durch mehr als die vier dargestellten, ausgeleuchteten Bereiche, aber auch durch weniger als die dargestellten vier ausgeleuchteten Bereiche zu bilden. Insbesondere wäre es auch denkbar, dass einer der ausgeleuchteten Bereiche im Zentrum der Lichtverteilung angeordnet ist und sich beiderseits der Vertikalen W erstreckt.

Schließlich wäre es auch denkbar, dass bei dem erfindungsgemäßen LED-Modul 1 die Reflektoren 2, 3 oberhalb der LEDs 4 bis 8 angeordnet sind. In diesem Ausführungsbeispiel würden dann die LEDs 4 bis 8, also Licht von unten nach oben auf die Reflektoren 2, 3 abstrahlen.

## Patentansprüche

1. LED-Modul (1) eines Scheinwerfers eines Kraftfahrzeugs zur Erzeugung einer abgeblendeten Lichtverteilung mit einer im Wesentlichen horizontalen Helldunkelgrenze (15), das LED-Modul (1) umfassend zwei Reflektoren (2, 3), deren Reflexionsflächen, welche eine paraboloide oder paraboloidförmige Form aufweisen, jeweils in mehrere Segmente (2-1, 2-2, 2-3; 3-1, 3-2, 3-3, 3-4) unterteilt sind, und mindestens zwei LEDs (4, 5, 6, 7, 8), wobei jedem der Reflektoren (2, 3) mindestens eine LED (4, 5, 6, 7, 8) zugeordnet ist, wobei die Helldunkelgrenze (15) der Lichtverteilung in mehrere nebeneinander liegende Abschnitte (B1, B2, B3, B4) unterteilt ist, wobei das LED-Modul (1) derart ausgebildet ist, dass zumindest einigen der LEDs (4, 5, 6, 7, 8) jeweils eines der Reflektorsegmente (2-1, 2-2, 2-3; 3-1, 3-2, 3-3, 3-4) primär zugeordnet ist und diese LEDs (4, 5, 6, 7, 8) im Zusammenwirken mit dem ihnen primär zugeordneten Reflektorsegment (2-1, 2-2, 2-3; 3-1, 3-2, 3-3, 3-4) einen Bereich (LV2-1, LV3-1, LV3-3, LV2-3) der Lichtverteilung ausleuchten, der einen bestimmten Abschnitt (B1, B2, B3, B4) der Helldunkelgrenze (15) erzeugt, und dass die Summe der LEDs (4, 5, 6, 7, 8) mit den ihnen jeweils primär zugeordneten Reflektorsegmenten (2-1, 2-3; 3-2, 3-3) die gesamte Helldunkelgrenze (15) erzeugt, und wobei jede der LEDs (4, 5, 6, 7, 8) im Zusammenwirken mit mindestens einem anderen, der LED sekundär zugeordneten Reflektorsegment (2-1, 2-2, 2-3; 3-1, 3-2, 3-3, 3-4) mindestens einen anderen Bereich der Lichtverteilung ausleuchtet, dessen oberer Rand nicht zur Bildung der Helldunkelgrenze (15) beiträgt, **dadurch gekennzeichnet, dass** jedes der einer LED (4, 5, 6, 7, 8) primär zugeordneten Segmente (2-1, 2-2, 2-3; 3-1, 3-2, 3-3, 3-4) der Reflektoren (2, 3) auf den Rand (14, 16) einer Leuchtfläche der dem Segment (2-1, 2-2, 2-3; 3-1, 3-2, 3-3, 3-4) primär zugeordneten LED (4, 5, 6, 7, 8) fokussiert ist und dass ein äußeres Segment (2-1, 2-3) eines Reflektors (2) auf einen vorderen, in Fahrtrichtung (22) des Kraftfahrzeugs angeordneten Rand (14, 16) der Leuchtfläche der dem Segment (2-1, 2-3) primär zugeordneten LED (4; 6) fokussiert ist.

2. LED-Modul (1) nach Anspruch 1, **dadurch gekennzeichnet, dass** der obere Rand des von jeder der LEDs (4, 5, 6, 7, 8) im Zusammenwirken mit dem mindestens einen anderen, der LED (4, 5, 6, 7, 8) sekundär zugeordneten Reflektorsegment (2-1, 2-2, 2-3; 3-1, 3-2, 3-3, 3-4) ausgeleuchteten Bereichs der Lichtverteilung unterhalb und in einem Abstand zu der Helldunkelgrenze (15) liegt.

3. LED-Modul (1) nach einem der Ansprüche 1 bis 2, **dadurch gekennzeichnet, dass** das LED-Modul (1) zur Erzeugung einer Abblendlicht-, einer Nebellicht- oder einer statischen Kurvenlichtverteilung ausgebildet ist.

4. LED-Modul (1) nach einem der Ansprüche 1 bis 3, **dadurch gekennzeichnet, dass** jedem Reflektor (2; 3) mindestens zwei separate Einzel-LEDs (4, 5, 6; 7, 8) zugeordnet sind.

5. LED-Modul (1) nach Anspruch 1, **dadurch gekennzeichnet, dass** zumindest eine der LEDs (4, 5, 6, 7, 8) entlang eines Randes (14, 16) ihrer Leuchtfläche, insbesondere entlang eines in Fahrtrichtung (22) des Kraftfahrzeugs angeordneten vorderen Randes, mit einer höheren Intensität Licht abstrahlt als in anderen Bereichen ihrer Leuchtfläche.

6. LED-Modul (1) nach einem der Ansprüche 1 bis 5, **dadurch gekennzeichnet, dass** das LED-Modul (1) derart ausgebildet ist, dass das von dem ersten Reflektor (2) reflektierte Licht eine breite Teillichtverteilung mit einer relativ großen horizontalen Erstreckung erzeugt, und das von dem zweiten Reflektor (3) reflektierte Licht eine konzentrierte Teillichtverteilung mit einer geringeren horizontalen Erstreckung als die von dem ersten Reflektor (2) erzeugte breite Teillichtverteilung erzeugt.

7. LED-Modul (1) nach einem der Ansprüche 1 bis 5, **dadurch gekennzeichnet, dass** das LED-Modul (1) derart ausgebildet ist, dass innerhalb eines Reflektors (2; 3) das von den äußeren Segmenten (2-1, 2-3; 3-1, 3-4) des Reflektors (2; 3) reflektierte Licht der ihnen primär zugeordneten LEDs (4, 5, 6, 7, 8) eine breite Teillichtverteilung mit einer relativ großen horizontalen Erstreckung erzeugt, und das von den innenliegenden Segmenten (2-2; 3_2, 3_3) des Reflektors (2; 3) reflektierte Licht der ihnen primär zugeordneten LEDs (4, 5, 6, 7, 8) eine konzentrierte Teillichtverteilung mit einer geringeren horizontalen Erstreckung als die von den äußeren Segmenten (2-1, 2-3; 3-1, 3-4) erzeugte breite Teillichtverteilung erzeugt.

8. LED-Modul (1) nach einem der Ansprüche 1 bis 7, **dadurch gekennzeichnet, dass** den Reflexionsflächen von zumindest einigen der Segmente (2-1 bis 3-4) der Reflektoren (2, 3) eine Feinstruktur, vorzugsweise eine Wellenstruktur überlagert ist, die derart ausgebildet ist, dass von den mit der Struktur versehenen Segmenten (2-1 bis 3-4) reflektiertes Licht vorzugsweise in vertikaler Richtung, besonders bevorzugt in ein Vorfeld der Lichtverteilung unmittelbar vor dem Kraftfahrzeug, gestreut wird.

9. LED-Modul (1) nach einem der Ansprüche 1 bis 8, **dadurch gekennzeichnet, dass** das LED-Modul (1) Mittel zur Variation eines jeweils eine einzelne LED (4 bis 8) speisenden elektrischen Stroms aufweist, um bestimmte Abschnitte der Helldunkelgrenze (15) und/oder bestimmte andere Bereiche der Lichtverteilung gezielt heller oder dunkler zu machen.

## Claims

1. LED module (1) of a vehicle headlight for generating a screened light distribution with a largely horizontal cutoff line (15), the LED module (1) comprising two reflectors (2, 3), the reflective surfaces of which are paraboloid in shape and are divided into multiple segments (2-1, 2-2, 2-3; 3-1, 3-2, 3-3, 3-4), and at least two LEDs (4, 5, 6, 7, 8), whereby at least one LED (4, 5, 6, 7, 8) is assigned to each reflector (2, 3), whereby the cutoff line (15) of the light distribution is divided into multiple adjacent segments (B1, B2, B3, B4), whereby the LED module (1) is designed such that at least some of the LEDs (4, 5, 6, 7, 8) are each primarily assigned to one of the reflector segments (2-1, 2-2, 2-3; 3-1, 3-2, 3-3, 3-4) and these LEDs (4, 5, 6, 7, 8) illuminate an area (LV2-1, LV3-1, LV3-3, LV2-3) of the light distribution together with their respective primarily assigned reflector segment (2-1, 2-2, 2-3; 3-1, 3-2, 3-3, 3-4), creating a certain area (B1, B2, B3, B4) of the cutoff line (15), and that the sum of the LEDs (4, 5, 6, 7, 8) with their respective primarily assigned reflector segments (2-1, 2-2, 2-3; 3-1, 3-2, 3-3, 3-4) generate the entire cutoff line (15), and whereby each of the LEDs (4, 5, 6, 7, 8) illuminates another area of the light distribution together with at least another, secondarily assigned reflector segment (2-1, 2-2, 2-3; 3-1, 3-2, 3-3, 3-4), and the upper margin of this area does not influence the creation of the cutoff line (15), **characterised in that** each of the segments (2-1, 2-2, 2-3; 3-1, 3-2, 3-3, 3-4) of the reflectors (2, 3) primarily assigned an LED (4, 5, 6, 7, 8) is focused on the margin (14, 16) of an illumination surface of the LED (4, 5, 6, 7, 8) primarily assigned to the segment (2-1, 2-2, 2-3; 3-1, 3-2, 3-3, 3-4), and that an external segment (2-1, 2-3) of a reflector (2) is focused on an anterior margin (14, 16) of the illumination surface of the LED (4; 6) primarily assigned to the segment (2-1, 2-3) in the direction of movement (22) of the vehicle.

2. LED module (1) as per claim 1, **characterised in that** the upper margin of the area of light distribution illuminated by each of the LEDs (4, 5, 6, 7, 8), in conjunction with the at least one other reflector secment (2-1, 2-2, 2-3; 3-1, 3-2, 3-3, 3-4) secondarily assigned to the LED (4, 5, 6, 7, 8) is below and at a distance from the cutoff line (15).

3. LED module (1) as per claims 1 through 2, **characterised in that** the LED module (1) is designed to generate a dipped beam, fog light, or static bending light distribution.

4. LED module (1) as per one of the claims 1 through 3, **characterised in that** each reflector (2; 3) is assigned at least two separate, single LEDs (4, 5, 6; 7, 8).

5. LED module (1) as per claim 1, **characterised in that** at least one of the LEDs (4, 5, 6, 7, 8) radiates light at a higher intensity along a margin (14, 16) of its illumination surface, in particular along an anterior margin in the direction of movement (22) of the vehicle, than in other areas of the illumination surface.

6. LED module (1) as per one of the claims 1 through 5, **characterised in that** the LED module (1) is designed such that light reflected from the first reflector (2) generates a broad partial light distribution with a relatively large horizontal range, and that the light reflected from the second reflector (3) generates a concentrated partial light distribution with a shorter horizontal range than the broad partial light distribution generated by the first reflector (2).

7. LED module (1) as per one of the claims 1 through 5, **characterised in that** the LED module (1) is designed such that, within a reflector (2; 3), the light of the primarily assigned LEDs (4, 5, 6, 7, 8) reflected from the outer segments (2-1, 2-3; 3-1, 3-4) of the reflector (2; 3) generates a broad partial light distribution with a relatively large horizontal range, and that light of the primarily assigned LEDs (4, 5, 6, 7, 8) reflected from the internal segments (2-3; 3-2, 3-3) generates a concentrated partial light distribution with a shorter horizontal range than the broad partial light distribution generated by the outer segments (2-1, 2-3; 3-1, 3-4).

8. LED module (1) as per one of the claims 1 through 7, **characterised in that** the reflective surfaces of at least some of the segments (2-1 to 3-4) of the reflectors (2, 3) are overlayed with a fine structure, preferably a wave structure, designed such that light reflected by the segments (2-1 to 3-4) fitted with this structure is preferably distributed vertically, more preferably in a forefield of the light distribution directly in front of the vehicle.

9. LED module (1) as per one of the claims 1 through 8, **characterised in that** the LED module (1) comprises means for varying an electrical current fed into a single LED (4 to 8) in order to make certain segments of the cutoff line (15) and/or certain other segments of the light distribution brighter or darker.

## Revendications

1. Module à DEL (1) d'un phare d'un véhicule automobile permettant de générer une répartition de lumière tamisée ayant une ligne de coupure (15) sensiblement horizontale, le module à DEL (1) comprenant deux réflecteurs (2, 3) dont les surfaces réfléchissantes, qui présentent une forme paraboloïde ou une forme de parabole, sont divisées respectivement en plusieurs segments (2-1, 2-2, 2-3; 3-1, 3-2, 3-3, 3-4), et au moins deux DEL (4, 5, 6, 7, 8), au moins une DEL (4, 5, 6, 7, 8) étant associée à chacun des réflecteurs (2, 3), suite à quoi la ligne de coupure (15) de la répartition de lumière est divisée en plusieurs sections (B1, B2, B3, B4) se trouvant les unes à côté des autres, le module à DEL (1) étant conçu de telle manière que respectivement un des segments de réflecteur (2-1, 2-2, 2-3; 3-1, 3-2, 3-3, 3-4) est associé de manière principale à au moins certaines des DEL (4, 5, 6, 7, 8) et que ces DEL (4, 5, 6, 7, 8) éclairent en coopération avec le segment de réflecteur (2-1, 2-2, 2-3; 3-1, 3-2, 3-3, 3-4) associé à celles-ci de manière principale une zone (LV2-1, LV3-1, LV3-3, LV2-3) de la répartition de lumière, qui génère une section déterminée (B1, B2, B3, B4) de la ligne de coupure (15), et que la somme des DEL (4, 5, 6, 7, 8) génère avec les segments de réflecteur (2-1, 2-3; 3-2, 3-3) associés à celles-ci respectivement de manière principale la ligne de coupure entière (15), et chacune des DEL (4, 5, 6, 7, 8) éclairant en coopération avec au moins un autre segment de réflecteur (2-1, 2-2, 2-3; 3-1, 3-2, 3-3, 3-4) associé de manière secondaire à la DEL au moins une autre zone de la répartition de lumière, dont le bord supérieur ne contribue pas à la formation de la ligne de coupure (15), **caractérisé en ce que** chacun des segments (2-1, 2-2, 2-3; 3-1, 3-2, 3-3, 3-4) des réflecteurs (2, 3) associés de manière principale à une DEL (4, 5, 6, 7, 8) est focalisé sur le bord (14, 16) d'une surface de lumière des DEL (4, 5, 6, 7, 8) associées de manière principale au segment (2-1 2-2, 2-3; 3-1, 3-2, 3-3, 3-4) et qu'un segment extérieur (2-1, 2-3) d'un réflecteur (2) est focalisé sur un bord (14, 16) avant, agencé dans le sens de la marche (22) du véhicule automobile, de la surface de lumière des DEL (4; 6) associées de manière principale au segment (2-1, 2-3).

2. Module à DEL (1) selon la revendication 1, **caractérisé en ce que** le bord supérieur de la zone éclairée par chacune des DEL (4, 5, 6, 7, 8), en coopération avec l'autre segment de réflecteur (2-1, 2-2, 2-3; 3-1, 3-2, 3-3, 3-4), au moins au nombre de un, associé de manière secondaire à la DEL (4, 5, 6, 7, 8), de la répartition de lumière se trouve en dessous et à une certaine distance de la ligne de coupure (15).

3. Module à DEL (1) selon l'une des revendications 1 à 2, **caractérisé en ce que** le module à DEL (1) est conçu pour générer une répartition de lumière de code, de lumière antibrouillard ou de phares adaptatifs statiques.

4. Module à DEL (1) selon l'une des revendications 1 à 3, **caractérisé en ce qu'**au moins deux DEL individuelles (4, 5, 6; 7, 8) séparées sont associées à chaque réflecteur (2; 3).

5. Module à DEL (1) selon la revendication 1, **caractérisé en ce qu'**au moins une des DEL (4, 5, 6, 7, 8) irradie de la lumière le long d'un bord (14, 16) de sa surface de lumière, en particulier le long d'un bord avant agencé dans le sens de la marche (22) du véhicule automobile, avec une intensité plus grande que dans d'autres zones de sa surface de lumière.

6. Module à DEL (1) selon l'une des revendications 1 à 5, **caractérisé en ce que** le module à DEL (1) est conçu de telle manière que la lumière réfléchie par le premier réflecteur (2) génère une large répartition de lumière partielle avec une étendue horizontale relativement grande, et la lumière réfléchie par le second réflecteur (3) génère une répartition de lumière partielle concentrée avec une étendue horizontale plus petite que celle de la large répartition de lumière partielle générée par le premier réflecteur (2).

7. Module à DEL (1) selon l'une quelconque des revendications 1 à 5, **caractérisé en ce que** le module à DEL (1) est conçu de telle manière que dans un réflecteur (2; 3), la lumière, réfléchie par les segments extérieurs (2-1, 2-3; 3-1, 3-4) du réflecteur (2; 3), des DEL (4, 5, 6, 7, 8) associées de manière principale à ceux-ci génère une large répartition de lumière partielle avec une étendue horizontale relativement grande, et **en ce que** la lumière réfléchie par les segments intérieurs (2-2; 3-2, 3-3) du réflecteur (2; 3) des DEL (4, 5, 6, 7, 8) associées à ceux-ci de manière principale génère une répartition de lumière partielle concentrée avec une étendue horizontale plus petite que celle de la large répartition de lumière partielle générée par les segments extérieurs (2-1, 2-3; 3-1, 3-4).

8. Module à DEL (1) selon l'une des revendications 1 à 7, **caractérisé en ce qu'**une structure fine, de préférence une structure en ondes, est superposée aux surfaces réfléchissantes d'au moins certains des segments (2-1 à 3-4) des réflecteurs (2, 3), laquelle est conçue de telle manière que de la lumière réfléchie par les segments (2-1 à 3-4) pourvus de la structure est diffusée de préférence dans le sens vertical, de manière particulièrement préférée dans une zone amont de la répartition de lumière directement devant le véhicule automobile.

9. Module à DEL (1) selon l'une des revendications 1 à 8, **caractérisé en ce que** le module à DEL (1) présente des moyens pour faire varier un courant électrique alimentant respectivement une DEL individuelle (4 à 8) afin de rendre plus clair ou plus foncé, de manière ciblée, des sections déterminées de la ligne de coupure (15) et/ou d'autres zones déterminées de la répartition de lumière.
